**Europäisches Patentamt**

**European Patent Office**

**Office européen des brevets**

(19)

(11) Veröffentlichungsnummer : **0 294 877 B1**

(12) **EUROPÄISCHE PATENTSCHRIFT**

(45) Veröffentlichungstag der Patentschrift :
16.10.91 Patentblatt 91/42

(51) Int. Cl.$^5$ : **C23C 22/86, B01D 61/44**

(21) Anmeldenummer : **88201107.5**

(22) Anmeldetag : **02.06.88**

(54) **Anwendung der Elektrodialyse zur Regeneration von Säurelösungen.**

(30) Priorität : **05.06.87 DE 3718829**

(43) Veröffentlichungstag der Anmeldung :
**14.12.88 Patentblatt 88/50**

(45) Bekanntmachung des Hinweises auf die
Patenterteilung :
**16.10.91 Patentblatt 91/42**

(84) Benannte Vertragsstaaten :
**BE DE ES FR GB IT NL**

(56) Entgegenhaltungen :
**FR-A- 2 273 082**
**GB-A- 992 767**
**US-A- 3 764 503**

(56) Entgegenhaltungen :
**US-A- 4 149 951**
**INDUSTRIAL AND ENGINEERING CHEMI-**
**STRY, Band 47, Nr. 1, Januar 1955, Seiten**
**67-70, American Chemical Society, Columbus,**
**Ohio, US; H.C. BRAMER et al.: "Electrolytic**
**regeneration of spent pickling solutions"**

(73) Patentinhaber : **METALLGESELLSCHAFT AG**
**Reuterweg 14 Postfach 3724**
**W-6000 Frankfurt/M.1 (DE)**

(72) Erfinder : **Pötzschke, Manfred, Dr.**
**Ulmenweg 45**
**W-6242 Kronberg (DE)**
Erfinder : **Brücken, Volker**
**Wiesbadener Strasse 126**
**W-6240 Königstein (DE)**

EP 0 294 877 B1

## Beschreibung

Die Erfindung betrifft die Anwendung der Elektrodialyse zur Regeneration von gebrauchten, Metallionen enthaltenden Säurelösungen, die durch eine von permselektiven Membranen begrenzte und zwischen einem Elektrodenpaar angeordnete Dialysierzelle geleitet wird.

Vom Stand der Technik, z.B. US-A-3764503, sind Elektrodialyse-Verfahren zur Regeneration von Säurelösungen, welche aber Keine Mischsäure enthalten (z.B. von Zinkbeiz-Lösungen nur $HNO_3$ enthaltend), bekannt.

Unter normalen atmosphärischen Bedingungen bilden sich auf den Oberflächen von aus Zink oder Zinklegierungen bestehenden Formkörpern, insbesondere auf durch Walzen hergestellten Blechen und Bändern schützende Deckschichten aus basischem Zinkkarbonat. Die Bildung dieser Deckschichten benötigt bei einer Atmosphäre mit 75% relativer Luftfeuchtigkeit etwa drei Tage. Diese Deckschichten weisen je nach der legierungsmäßigen Zusammensetzung der Formkörper, nach der örtlichen Lage sowie in Abhängigkeit von der Atmosphäre und Zeit einen hell- bis dunkelgrauen Farbton auf. Die Ausbildung solcher Deckschichten wird jedoch durch den Gehalt der Luft an Verunreinigungen, z.B. an Schwefeldioxid verzögert bzw. verhindert.

Es ist deshalb in zahlreichen Fällen aus ästhetischen Gründen eine Oberflächenbehandlung erforderlich. Die technischen Vorteile einer solchen Behandlung bestehen in der Vereinheitlichung der Deckschichtbildung. Durch die Oberflächenbehandlung läßt sich eine gleichmäßige Farbtönung erzielen.

Zur Herstellung von dunkelgrauen bis schwarzen Deckschichten einheitlicher Farbtönung auf aus Zink-Kupfer-Titan-Legierungen bestehenden Formkörpern, insbesondere auf durch Walzen hergestellten Blechen und Bändern ist es bekannt, die Formkörper in einer Lösung aus 60 bis 90 Vol.% Wasser, 10 bis 40 Vol.% Salpetersäure und 5 bis 10 Vol.% Schwefelsäure zu behandeln (DE-PS 2757592). Die die Deckschichtbildung bewirkende Beizreaktion ist zu ca. 2/3 auf die Reduktion von Salpetersäure zu Ammonium und zu ca. 1/3 auf die Reduktion von Wasserstoff-Ionen zu Wasserstoff zurückzuführen. In der benutzten Säurelösung sind Zink-, Kupfer-, Titan- und $NH_4$-Kationen enthalten.

Es ist die Aufgabe der vorliegenden Erfindung, die Metalle, vorzugsweise Zink, aus der Säurelösung zurückzugewinnen und gleichzeitig das Ammonium zu entfernen, so daß die gereinigte Säurelösung im Kreislauf gefahren werden kann und die Zugabe von Chemikalien zum Auffrischen der Säurelösung möglichst gering ist.

Die Lösung dieser Aufgabe besteht in der Anwendung der Elektrodialyse auf die zur Herstellung von dunkelgrauen bis schwarzen Deckschichten einheitlicher Farbtönung auf aus Zink-Kupfer-Titan-Legierung bestehenden Formkörpern eingesetzte Säurelösung, bestehend aus 60 bis 95 Vol.% Wasser, 5 bis 40 Vol.% Salpetersäure und 2,5 bis 10 Vol.% Schwefelsäure.

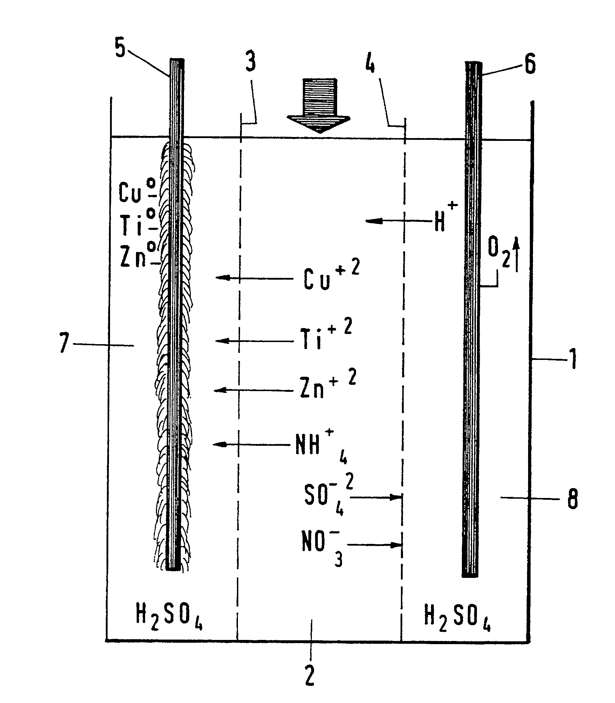

Die Erfindung ist im folgenden anhand eines Ausführungsbeispiels und durch die Zeichnung näher erläutert.

Ein zur Herstellung dunkelgrauer Deckschichten auf aus Zink-Kupfer-Titan-Legierung bestehenden Blechen benutztes Bad mit 3,5 m³ Säurelösung aus 85 Vol.% Wasser, 10 Vol.% Salpetersäure und 5 Vol.% Schwefelsäure, in das jedes einzelne Blech ca. 60 s lang getaucht wird, enthält nach etwa zwölfstündiger Benutzungsdauer 140 kg Zinkionen, je 14 g Kupfer- und Titanionen sowie 6 kg Ammoniumionen. Die mit den genannten Kationen angereicherte Säurelösung wird der in der Mitte einer Dreifachzellen-Elektrodialyse-Einrichtung (1) liegenden Dialysierzelle (2) zugeführt. Diese ist durch zwei kationenselektive Ionenaustauscher-Membranen (3, 4) von den jeweils mit 25%iger Schwefelsäure gefüllten und mit je einer darin angeordneten Elektrode (5, 6) versehenen Anodenzelle (8) und Kathodenzelle (7) getrennt. Durch das Anlegen eines elektrischen Potentialgefälles wandern die Zink-, Kupfer-, Titan- und Ammonium-Kationen aus der Dialysierzelle (2) in die Kathodenzelle (7) und werden gegen Wasserstoff ausgetauscht, der aus der Anodenzelle (8) in die Dialysierzelle (2) gelangt. Die Metallionen können entweder direkt an der Kathode (5) abgeschieden werden oder nur in die Schwefelsäure überführt werden, wobei die Abscheidung erst später erfolgen kann. Die Reaktion des Ammoniumions zu Ammoniak wird durch den niedrigen pH-Wert in der Kathodenzelle (7) unterdrückt. Da die Membranen (3, 4) nur für Kationen durchlässig sind, wird das Nitrat der Salpetersäure nicht in die Anodenzelle (8) überführt und somit die anodische Zersetzung des Nitrats verhindert.

Der mit der erfindungsgemäßen Maßnahme erzielte Vorteil ist insbesondere darin zu sehen, daß die Zusammensetzung der vorstehend beschriebenen Säurelösung konstant gehalten werden kann und nur von Zeit zu Zeit ein Auffrischen durch Salpetersäure erforderlich ist.

## Patentansprüche

1. Anwendung der Elektrodialyse zur Regeneration von gebrauchten, Metallionen enthaltenden Säurelösungen, die durch eine von permselektiven Membranen begrenzte und zwischen einem Elektrodenpaar angeordnete Dialysierzelle geleitet werden, auf eine zur Herstellung von dunkelgrauen bis schwarzen Deckschichten einheitlicher Farbtönung auf aus Zink-Kupfer-Titanlegierungen bestehenden Formkörpern, vorzugsweise auf durch Walzen hergestellten Blechen und Bändern, benutzte Säurelösung aus 60 bis 95 Vol.% Wasser, 5 bis 40 Vol.% Salpetersäure und 2,5 bis 10 Vol.% Schwefelsäure.

## Claims

1. The application of electrodialysis for the regeneration of spent acid solutions containing metal ions, which solutions are passed through a dialysis chamber which is defined by selectively permeable membranes and is located between a pair of electrodes, to an acid solution of 60 to 95% by volume water, 5 to 40% by volume nitric acid and 2.5 to 10% by volume sulphuric acid which is used for the production of dark-grey to black covering layers of uniform shading on shaped bodies consisting of zinc-copper-titanium alloys, preferably to sheets and strips produced by rolling.

## Revendications

1. L'application de l'électrodialyse à la régénération de solutions acides, usées, contenant des ions métalliques et qui sont envoyées dans un compartiment de dialyse délimité par des membranes sélectives à la perméation et disposé entre une paire d'électrodes, à une solution acide utilisée pour la préparation de couches de finition grises sombres à noires de nuance de coloration uniforme sur des pièces en alliages de zinc, de cuivre et de titane, de préférence sur des tôles et des feuillards fabriqués par laminage et constituée de 60 à 95% en volume d'eau, de 5 à 40% en volume d'acide nitrique, et de 2,5 à 10% en volume d'acide sulfurique.